(19) Europäisches Patentamt / European Patent Office / Office européen des brevets

(11) **EP 4 783 600 A1**

(12) **EUROPEAN PATENT APPLICATION**
published in accordance with Art. 153(4) EPC

(43) Date of publication:
**29.07.2026 Bulletin 2026/31**

(21) Application number: **24866864.2**

(22) Date of filing: **09.05.2024**

(51) International Patent Classification (IPC):
**H04N 23/67** *(2023.01)*

(52) Cooperative Patent Classification (CPC):
**G06F 18/2321; H04N 23/67**

(86) International application number:
**PCT/CN2024/091955**

(87) International publication number:
**WO 2025/060440 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 CN 202311239870**

(71) Applicant: **Zhejiang Uniview Technologies Co.,
Ltd.**
**Hangzhou, Zhejiang 310051 (CN)**

(72) Inventor: **SHI, Fei**
**Hangzhou, Zhejiang 310051 (CN)**

(74) Representative: **De Ros, Alberto et al
Società Italiana Brevetti S.p.A.
Via G. Carducci 8
20123 Milano (IT)**

(54) **FOCUSING METHOD AND APPARATUS, ELECTRONIC DEVICE, AND STORAGE MEDIUM**

(57)    The present disclosure relates to the technical field of photographing, and provides a focusing method and apparatus, an electronic device, and a storage medium. The method includes: performing focus searching on the basis of a target focusing strategy, and obtaining a first target image captured by an electronic device when a focusing motor is at each first focus position; for each first target image, determining FVs of at least two image blocks in the first target image; for each target image block at the same position of each first target image, on the basis of the FVs of the target image block in all the first target images, determining a first maximum FV corresponding to the target image block; clustering the focus positions corresponding to all the first maximum FVs to obtain a first clustering result; and performing focusing on the basis of the first clustering result.

Perform a focusing search based on a target focusing strategy, and obtain first target images captured by an electronic device at each first focusing position of the focusing motor — 201

Determine FVs of at least two image blocks in each of the first target images — 202

Determine a first maximum FV corresponding to each of the target image blocks at a same position in each of the first target images based on the FVs of the target image blocks of all the first target images — 203

Cluster on focusing positions corresponding to all the first maximum FVs to obtain a first clustering result — 204

Focus based on the first clustering result — 205

FIG. 2

EP 4 783 600 A1

**Description**

CROSS-REFERENCES TO RELATED APPLICATIONS

The present application claims priority to the Chinese patent application No. 202311239870X filed on September 22, 2023, entitled "Focusing Method and Apparatus, Electronic Device, and Storage Medium", which is incorporated herein by reference in its entirety.

FIELD

The present application relates to the field of photography, and in particular to a focusing method and apparatus, an electronic device, and a storage medium.

BACKGROUND

In the field of video monitoring, traditional focusing methods calculate focus values (FVs) of a picture based on a preset fixed area and a fixed weight, and control a focusing motor to execute a hill-climbing algorithm based on the FVs to search for an optimal clear point position.

However, in a multi-object distance scenario, since clear point positions for different object distances are different, FV curves for different object distances are usually weighted and superimposed, resulting in that none of multiple peak values of the weighted and superimposed FV curve is the optimal clear point, thereby reducing focusing accuracy.

BRIEF SUMMARY

In view of the problems, the present application provides a focusing method and apparatus, an electronic device, and a storage medium.

A focusing method is provided according to the present application, including:

performing a focusing search based on a target focusing strategy, and obtaining first target images captured by an electronic device at each first focusing position of a focusing motor;

determining focus values (FVs) of at least two image blocks in each of the first target images;

determining a first maximum FV corresponding to each of the target image blocks at a same position in each of the first target images based on the FVs of the target image blocks of all the first target images;

clustering on focusing positions corresponding to all the first maximum FVs to obtain a first clustering result; and

focusing based on the first clustering result.

A focusing apparatus is also provided according to the present application, including:

an obtaining unit configured to perform a focusing search based on a target focusing strategy, and obtain first target images captured by an electronic device at each first focusing position of a focusing motor;

a first determining unit configured to determine focus values (FVs) of at least two image blocks in each of the first target images;

a second determining unit configured to determine a first maximum FV corresponding to each of the target image blocks at a same position in each of the first target images based on the FVs of the target image blocks of all the first target images;

a clustering unit configured to cluster on focusing positions corresponding to all the first maximum FVs to obtain a first clustering result; and

a focusing unit configured to focus based on the first clustering result.

An electronic device is also provided according to the present application, including a memory, a processor, and a computer program stored in the memory and executable in the processor, where the processor implements any of focusing methods described above when executing the computer program.

A computer-readable storage medium is also provided according to the present application, storing a computer program, and the computer program implements any of focusing methods described above when executed by a processor.

A computer program product is also provided according to the present application, including a computer program, and the computer program implements any of focusing methods described above when executed by a processor.

The focusing method and apparatus, the electronic device, and the storage medium provided by the present application perform a focusing search based on a target focusing strategy, and obtain first target images captured by the electronic device at each first focusing position of a focusing motor; determine FVs of at least two image blocks in each of the first target images; determine a first maximum FV corresponding to each of the target image blocks at a same position in each of the first target images based on the FVs of the target image blocks of all the first target images; cluster on focusing positions corresponding to all the first maximum FVs; and finally focus based on the obtained first clustering result. The present application obtains an object distance distribution law based on the clustering result of the maximum FVs corresponding to the image blocks, and focuses based on the object distance distribution law, thereby improving focusing accuracy.

BRIEF DESCRIPTION OF THE DRAWINGS

FIG. 1 is a schematic diagram of focus value (FV) curves in related art;

FIG. 2 is a first schematic flowchart of a focusing method according to an embodiment of the present application;

FIG. 3 is a diagram of focus curves of a zoom camera at different object distances according to an embodiment of the present application;

FIG. 4 is a second schematic flowchart of a focusing method according to an embodiment of the present application;

FIG. 5 is a third schematic flowchart of a focusing method according to an embodiment of the present application;

FIG. 6 is a schematic diagram of a monitoring scenario according to an embodiment of the present application;

FIG. 7 is a diagram of curves corresponding to focus values (FVs) of each image block in a multi-object distance scenario according to an embodiment of the present application;

FIG. 8 is a schematic diagram of clustering results of focusing positions corresponding to focus values (FVs) of each image block in a multi-object distance scenario according to an embodiment of the present application;

FIG. 9 is a schematic structural diagram of a focusing apparatus according to an embodiment of the present application; and

FIG. 10 is a schematic structural diagram of an electronic device according to an embodiment of the present application.

DETAILED DESCRIPTION

The solutions in the present application will be described below in conjunction with the accompanying drawings in the present application. The described embodiments are only part of the embodiments of the present application, but not all of the embodiments.

Depth of field refers to a state where images at different object distances all present an acceptable clarity within a certain focusing range, and the focusing range is referred to as depth of focus.

The focus clarity evaluation value (that is, focus value, FV) characterizes the clarity degree of an image.

The position of a zoom motor (that is, zoom position, Zpos) is achieved by controlling the rotation of the zoom motor to drive a lens group to move, changing the focal length of the lens to realize a zoom action.

The focusing motor position (that is, focusing position, Fpos) is achieved by adjusting the position of the focusing motor to drive a focus lens group to move, thereby realizing changes between image clarity and blurriness.

A focus curve refers to a curve composed of the clear points (FPos) corresponding to each zoom position (ZPos) at a specified object distance, also referred to as a zoom-focus curve. Focus curves differ at different object distances.

A hill-climbing algorithm is a local optimization algorithm that starts from a current focus position, arbitrarily selects a direction, and after changing the focusing position, obtains an FV and compares it with an FV of a previous position. If the FV trend increases, the focus continues to move in that direction; and if the FV trend decreases, the focus moves in the opposite direction. This cycle continues until the focusing position corresponding to the maximum FV is found. Since this is not a comprehensive search, the final result may be a local maximum.

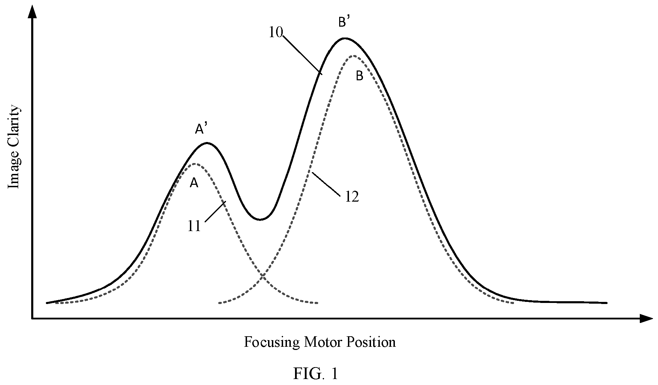

As shown in FIG. 1, a solid line 10 represents a weighted and superimposed FV curve corresponding to an object distance A and object distance B, a dashed line 11 represents an FV curve corresponding to a single object distance A, and a dashed line 12 represents an FV curve corresponding to a single object distance B. The peak corresponding to the object distance A of the solid line 10 and the peak corresponding to the object distance A of the dashed line 11 are not the same point, and the peak corresponding to the object distance B of the solid line 10 and the peak corresponding to the object distance B of the dashed line 12 are not the same point. Therefore, multiple peaks of the weighted and superimposed FV are not optimal clear points, thereby reducing focusing accuracy.

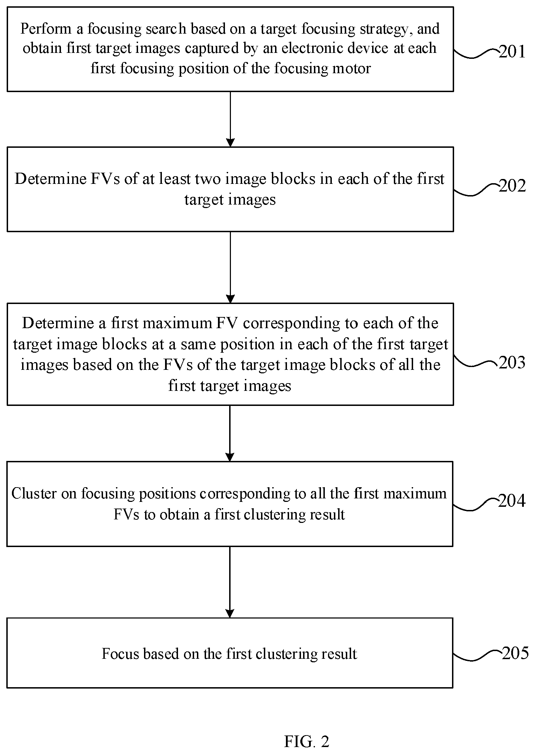

The focusing method of the present application is described below in conjunction with FIG. 2 to FIG. 8. The execution subject of the method may be an electronic device, and the electronic device may be a camera device, or a terminal with a camera function, etc.

FIG. 2 is a first schematic flowchart of a focusing method according to an embodiment of the present application. As shown in FIG. 2, the focusing method includes following steps.

Step 201: perform a focusing search based on a target focusing strategy, and obtain first target images captured by an electronic device at each first focusing position of the focusing motor.

In an embodiment, the target focusing strategy is a focusing strategy set by a user, and the focusing strategy includes focusing on a nearest object distance, focusing on an N-th object distance starting from the nearest object distance, or focusing on multiple object distances, etc.

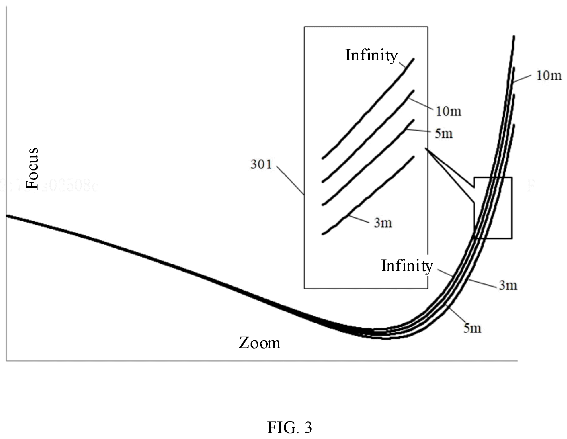

A minimum focusing position and a maximum focusing position of an initial focusing search interval are determined based on clear point positions corresponding to a curve of a minimum focusing distance and an infinite object distance of the electronic device. A position between the minimum focusing position and the maximum focusing position is determined as the initial focusing search interval. As shown in FIG. 3, a rectangular box 301 is a partial enlargement of the curve. The focusing position corresponding to an object distance of 3 m is determined as the minimum focusing position, and the focusing position corresponding to an infinite object distance is determined as the maximum focusing position. To prevent the clear point positions of electronic devices from exceeding the initial focusing search interval, the initial focusing search interval may be expanded based on half a depth of focus under the current focal length of the electronic device to obtain a final focusing search interval. Then, the hill-climbing algorithm is adopted based on the target focusing strategy set by the user to perform a focusing search within the focusing search interval, to obtain each first focusing position of the focusing motor during the focusing search process. At each first focusing position, a first target image captured by the electronic device is obtained, that is, the first target image corresponding to each first focusing position is obtained.

Step 202: determine FVs of at least two image blocks in each of the first target images.

In an embodiment, for each first target image, the first target image is divided into M rows and N columns to obtain M*N image blocks, and the FV of each image block is calculated. A matrix composed of FVs of all image blocks in the first target image is denoted as V, where V is an M*N matrix containing the FV of each image block, and V is represented by the following formula (1).

$$V = [V_{ij}], \text{ where } i \in [0\text{-}M], j \in [0\text{-}N] \qquad (1)$$

In the embodiment, $[V_{ij}]$ represents the FV of the image block corresponding to the i-th row and the j-th column.

Step 203: determine a first maximum FV corresponding to each of the target image blocks at a same position in each of the first target images based on the FVs of the target image blocks of all the first target images.

In an embodiment, when obtaining the FV of each image block in the first target image, for target image blocks at the same position in all the first target images, a maximum FV is found among the FVs of the target image blocks of all the first target images, and the maximum FV is determined as the first maximum FV value corresponding to the target image block. According to the same method, the first maximum FV corresponding to each target image block at the same position is obtained.

Step 204: cluster on focusing positions corresponding to all the first maximum FVs to obtain a first clustering result.

In an embodiment, when obtaining the first maximum FV corresponding to each target image block, clustering is performed on the focusing positions corresponding to all the first maximum FVs using a clustering algorithm to obtain the first clustering result, and an object distance distribution law is found in the current scenario through the first clustering result. In an embodiment, the clustering algorithm may be a density-based spatial clustering of applications with noise (DBSCAN) clustering algorithm, which is a density-based spatial clustering algorithm capable of dividing areas with sufficiently high density into clusters.

Step 205: focus based on the first clustering result.

In an embodiment, when obtaining the first clustering result, focus is performed based on the object distance distribution law represented by the first clustering result.

The focusing method provided by the present application performs a focusing search based on a target focusing strategy, and obtains first target images captured by the electronic device at each first focusing position of the focusing motor; determines FVs of at least two image blocks in each of the first target images; determines a first maximum FV corresponding to each of the target image blocks at a same position in each of the first target images based on the FVs of the target image blocks of all the first target images; clusters on focusing positions corresponding to all the first maximum FVs; and finally focuses based on the obtained first clustering result. The present application obtains an object distance distribution law based on the clustering result of the maximum FVs corresponding to the image blocks, and focuses based on the object distance distribution law, thereby improving focusing accuracy.

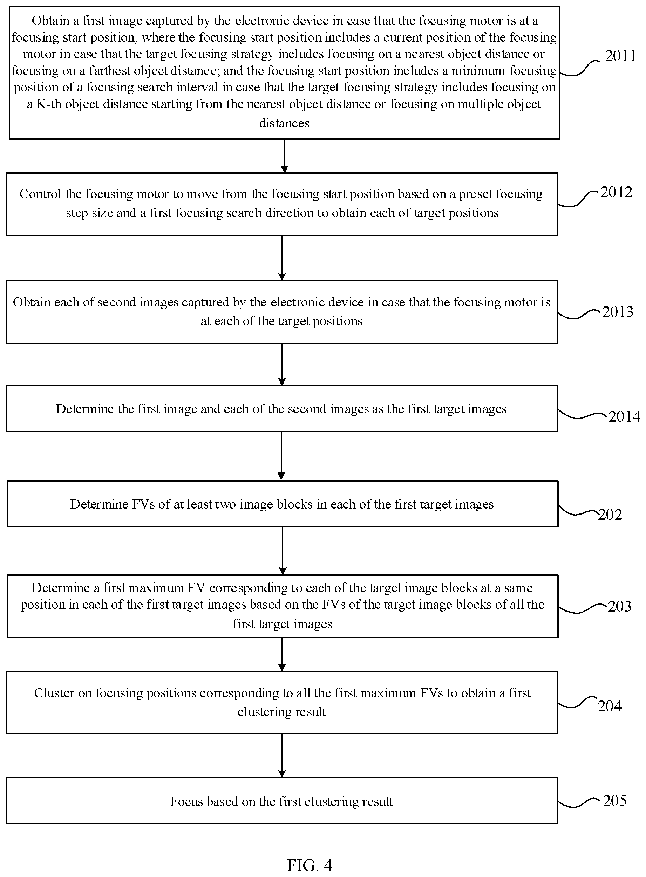

FIG. 4 is a second schematic flowchart of a focusing method according to an embodiment of the present application. As shown in FIG. 4, the above Step 201 of performing the focusing search based on the target focusing strategy, and obtaining the first target images captured by the electronic device at each first focusing position of the focusing motor is implemented through following steps.

Step 2011: obtain a first image captured by the electronic device in case that the focusing motor is at a focusing start position, where the focusing start position includes a current position of the focusing motor in case that the target focusing strategy includes focusing on a nearest object distance or focusing on a farthest object distance; and the focusing start position includes a minimum focusing position of a focusing search interval in case that the target focusing strategy includes focusing on a K-th object distance starting from the nearest object distance or focusing on multiple object distances, where K is an integer greater than or equal to 1.

In an embodiment, first the focusing start position is determined based on the target focusing strategy, then the focusing motor is moved to the focusing start position, and the first image captured by the electronic device is obtained after the focusing motor is stable.

Step 2012: control the focusing motor to move from the focusing start position based on a preset focusing step size and a first focusing search direction to obtain each of target positions.

In an embodiment, in case that the target focusing strategy includes focusing on the nearest object distance, the first focusing search direction is a direction searching towards the minimum focusing position of the focusing search interval; in case that the target focusing strategy includes focusing on the farthest object distance, the first focusing search direction is a direction searching towards the maximum focusing position of the focusing search interval; and in case that the target focusing strategy includes focusing on the K-th object distance starting from the nearest object distance or focusing on multiple object distances, the first focusing search direction is a direction searching towards the maximum focusing position of the focusing search interval.

In an embodiment, the focusing step size is a trade-off between focusing speed and focusing accuracy. If the focusing step size is too large, the focusing speed is fast, but the focusing result accuracy is poor; and if the focusing step size is too small, the focusing speed is slow, but the focusing result accuracy is high. A suitable focusing step size may be selected according to actual focusing requirements, and the present application does not limit this. For example, 1/4 of a depth of focus may be selected as the preset focusing step size. The first focusing search direction is determined based on the target focusing strategy.

In an embodiment, when determining the preset focusing step size and the first focusing search direction, the focusing motor is controlled to move from the focusing start position to a next focusing position based on the preset focusing step size and the first focusing search direction. In case that the first focusing search direction is a direction searching towards the maximum focusing position of the focusing search interval, the next focusing position is the current focusing position plus the preset focusing step size; and in case that the first focusing search direction is a direction searching towards the minimum focusing position of the focusing search interval, the next focusing position is the current focusing position minus the preset focusing step size. This movement is repeated until the focusing motor reaches the maximum focusing position of the focusing search interval, thereby finally obtaining each target position of the focusing motor during the focusing search process.

Step 2013: obtain each of second images captured by the electronic device in case that the focusing motor is at each of the target positions.

In an embodiment, a second image captured by the electronic device is obtained at each of the target positions, that is, the second image corresponding to each of the target positions is obtained.

Step 2014: determine the first image and each of the second images as the first target images.

In an embodiment, both the first image and each of the second images captured by the electronic device are determined as the first target images corresponding to the focusing search process.

In the embodiment, the focusing start position and the first focusing search direction may be determined based on the target focusing strategy, and the focusing search is performed based on the determined focusing start position and first focusing search direction to finally obtain each first target image, thereby realizing the process of obtaining target images based on user requirements.

In an embodiment, the above Step 205 of focusing based on the first clustering result may be implemented in the following manners.

An average value of the first focusing positions corresponding to all the first maximum FVs are determined as a first target clear point position in case that a number of clusters in the first clustering result is zero, and the focusing motor is controlled to move to the first target clear point position.

In an embodiment, when the number of clusters in the first clustering result is zero, it indicates that no clear point position is found, and object distances in the current scenario change evenly without clear object distance boundaries. The average value of the first focusing positions corresponding to all the first maximum FVs may be determined as the first target clear point position, and the focusing motor is controlled to move to the first target clear point position, thereby completing focusing.

A second target clear point position is determined based on the target focusing strategy and a center value of the clusters in case that the number of clusters in the first clustering result is not zero, and the focusing motor is controlled to move to the second target clear point position.

In an embodiment, when the number of clusters in the first clustering result is not zero, there is at least one object distance in the current scenario. The final second target clear point position is determined based on the target focusing strategy and the center value of each cluster in the first clustering result, and the focusing motor is controlled to move to the second target clear point position, thereby completing focusing.

In case that the number of clusters in the first clustering result is not zero, determining the second target clear point position based on the target focusing strategy and the center value of the clusters may be divided into the following cases.

In a first case, a distance between the center value of the cluster and the focusing start position is determined in case that the number of clusters in the first clustering result is equal to 1, and the target focusing strategy includes focusing on the nearest object distance or focusing on the farthest object distance.

The center value of the cluster is determined as the second target clear point position in case that the distance is greater than or equal to a preset distance.

A focusing search is performed from the focusing start position based on the preset focusing step size and a second focusing search direction to obtain second target images captured by the electronic device at each second focusing position of the focusing motor in case that the distance is less than the preset distance; FVs of at least two image blocks in each of the second target images are determined; a second maximum FV corresponding to each of the target image blocks at a same position is determined based on the FVs of the target image blocks of all the first target images and all the second target images; clustering is performed on focusing positions corresponding to all the second maximum FVs to obtain a second clustering result; and the second target clear point position is determined based on the second clustering result.

In an embodiment, the second focusing search direction is opposite to the first focusing search direction, and the center value of the cluster is an average value of all focusing positions included in the cluster.

In an embodiment, in case that the number of clusters in the first clustering result is equal to 1, and the target focusing strategy includes focusing on the nearest object distance or focusing on the farthest object distance, since when the target focusing strategy is focusing on the nearest object distance or focusing on the farthest object distance, the focusing start position is the current position of the electronic device, that is, the focusing start position may not be at the boundary of the focusing search interval, indicating that the focusing search has not traversed the entire focusing search interval, it is necessary to determine the distance between the center value of the cluster in the first clustering result and the focusing start position, and compare the distance with the preset distance. In case that the distance is greater than or equal to the preset distance, it indicates that the center value of the cluster is far from the focusing start position, and the center value of the cluster may be directly determined as the second target clear point position. In case that the distance is less than the preset distance, it indicates that the center value of the cluster is close to the focusing start position, and also indicates that the second target clear point position may be in an unsearched area. It is necessary to perform a reverse search, that is, perform a focusing search from the focusing start position based on the preset focusing step size and the second focusing search direction opposite to the first focusing search direction, to obtain second target images captured by the electronic device at each second focusing position of the focusing motor, and calculate the FV of each second image block in each second target image. It needs to be emphasized here that the number of second image blocks in the second target image is the same as the number of first image blocks in the first target image. For target image blocks at the same position, it is necessary to determine the second maximum FV corresponding to the target image block based on the FVs of the target image blocks of all the first target images and all the second target images obtained from the forward and reverse searches twice, then clustering is performed on all the obtained second maximum FVs to obtain a second clustering result, and the final second target clear point position is determined based on the second clustering result.

It should be noted that the specific process of determining the final second target clear point position based on the second clustering result may refer to the specific process of determining the first target clear point position based on the first clustering result, and the present application will not elaborate herein.

In a second case, the center value of the cluster is determined as the second target clear point position in case that the number of clusters in the first clustering result is equal to 1, and the target focusing strategy includes focusing on the K-th object distance starting from the nearest object distance or focusing on multiple object distances.

In an embodiment, when the target focusing strategy is focusing on the K-th object distance starting from the nearest object distance or focusing on multiple object distances, the focusing start position is the minimum focusing position of the focusing search interval, that is, the focusing start position is at the boundary of the focusing search interval, indicating that the focusing search has traversed the entire focusing search interval. In case that the number of clusters in the first clustering result is equal to 1, and the target focusing strategy includes focusing on the K-th object distance starting from the nearest object distance or focusing on multiple object distances, it is impossible to focus separately for each object distance. The center value of the cluster is directly determined as the second target clear point position.

In a third case, a smallest center value of the clusters is determined as the second target clear point position in case that values of focusing positions increase sequentially in a direction from the nearest object distance to the farthest object distance, the number of clusters in the first clustering result is greater than 1, and the target focusing strategy includes focusing on the nearest object distance.

In an embodiment, in case that the number of clusters in the first clustering result is greater than 1, and the target focusing strategy includes focusing on the nearest object distance, the center value of each cluster is determined. Since the smallest center value of the cluster is closer to the nearest object distance, the smallest center value of the cluster is determined as the second target clear point position.

In a fourth case, a largest center value of the clusters is determined as the second target clear point position in case that values of focusing positions increase sequentially in a direction from the nearest object distance to the farthest object distance, the number of clusters in the first clustering result is greater than 1, and the target focusing strategy includes focusing on the farthest object distance.

In an embodiment, in case that the number of clusters in the first clustering result is greater than 1, and the target focusing strategy includes focusing on the farthest object distance, the center value of each cluster is determined. Since the largest center value of the cluster is closer to the farthest object distance, the largest center value of the cluster is determined as the second target clear point position.

In a fifth case, a K-th center value of the clusters is determined as the second target clear point position based on an ascending order of the center values of the clusters in case that values of focusing positions increase sequentially in a direction from the nearest object distance to the farthest object distance, the number of clusters in the first clustering result is greater than 1, and the target focusing strategy includes focusing on the K-th object distance starting from the nearest object distance.

In an embodiment, in case that the number of clusters in the first clustering result is greater than 1, and the target focusing strategy includes focusing on the K-th object distance starting from the nearest object distance, the center value of each cluster is determined, and the center values of the clusters are sorted in an ascending order. The K-th center value of the cluster may be determined as the second target clear point position. For example, if the value of K is 2, the second center value of the cluster is determined as the second target clear point position.

In a sixth case, each sorted center value of the clusters is determined as the second target clear point positions corresponding to object distances from near to far based on the ascending order of the center values of the clusters in case that values of focusing positions increase sequentially in a direction from the nearest object distance to the farthest object distance, the number of clusters in the first clustering result is greater than 1, and the target focusing strategy includes focusing on multiple object distances.

In an embodiment, in case that the number of clusters in the first clustering result is greater than 1, and the target focusing strategy includes focusing on multiple object distances, the center value of each cluster is determined, and the center values of the clusters are sorted in an ascending order. Each sorted center value of the clusters are sequentially determined as the second target clear point position corresponding to object distances from near to far. For example, the target focusing strategy includes focusing on 3 object distances sequentially from near to far, and the determined number of clusters is 3. The center values of the three clusters are sorted in an ascending order to obtain center value 1, center value 2, and center value 3, where center value 1 is less than center value 2, and center value 2 is less than center value 3. Center value 1 is determined as the second target clear point position corresponding to the nearest object distance, center value 2 is determined as the second target clear point position corresponding to the intermediate object distance, and center value 3 is determined as the second target clear point position corresponding to the farthest object distance. In addition, since each cluster includes multiple focusing position samples, a focusing area included in the corresponding object distance may be composed based on the size of each focusing position sample included in the cluster. The focusing motor may be moved to the corresponding object distance based on the strategy of focusing on multiple object distances set by the user when the second target clear point position corresponding to each object distance is determined, thereby realizing custom object distance focusing.

It should be noted that when the target focusing strategy is focusing on the nearest object distance or focusing on the farthest object distance, after performing the reverse search, if the number of clusters in the second clustering result is still zero, it indicates that object distances in the current scenario change evenly without clear object distance boundaries. The focusing position corresponding to the average value of all maximum FVs is determined as the clear point position. Similarly, when the target focusing strategy is focusing on the K-th object distance starting from the nearest object distance or focusing on multiple object distances, after completing the full-stroke focusing search, if the number of clusters in the first clustering result is still zero, it indicates that object distances in the current scenario change evenly without clear object distance boundaries. The focusing position corresponding to the average value of all maximum FVs is determined as the clear point position.

It should be noted that the present application may also set an early search termination function to avoid unnecessary search and accelerate focusing speed. During the focusing search process, the FV of image blocks in the image captured by the electronic device at each position of the focusing motor are calculated to obtain a matrix V corresponding to each position. A ratio R of the FV of each image block in two adjacent Vs is calculated. If a proportion of the target area of concern to the image screen is preset as $\alpha$, targets smaller than the target area are not of concern. During the focusing search process in a certain direction, if R corresponding to continuous L frames of image blocks occupying a proportion $(1-\alpha)$ of the image screen is all less than 1, it indicates that there is no clear point position corresponding to the target area in the current search direction. Therefore, the search in this direction may be ended in advance.

In an embodiment, the ratio R may be represented by following formula (2),

$$R_{21} = \left[V_{2ij}/V_{1ij}\right], \text{ where } i \in [0\text{-}M], j \in [0\text{-}N] \quad (2)$$

In the embodiment, $R_{21}$ represents the ratio of $V_{1ij}$ of the image block in the 1st V and $V_{2ij}$ of the image block in the second V.

In an embodiment, a largest center value of the clusters is determined as the second target clear point position in case that that values of focusing positions decrease sequentially in a direction from the nearest object distance to the farthest object distance, the number of clusters in the first clustering result is greater than 1, and the target focusing strategy includes focusing on the nearest object distance.

In an embodiment, a smallest center value of the clusters is determined as the second target clear point position in case that values of focusing positions decrease sequentially in a direction from the nearest object distance to the farthest object distance, the number of clusters in the first clustering result is greater than 1, and the target focusing strategy includes focusing on the farthest object distance.

In an embodiment, a K-th center value of the clusters is determined as the second target clear point position based on a descending order of the center values of the clusters in case that values of focusing positions decrease sequentially in a direction from the nearest object distance to the farthest object distance, the number of clusters in the first clustering result is greater than 1, and the target focusing strategy includes focusing on the K-th object distance starting from the nearest object distance.

In an embodiment, each sorted center value of the clusters is determined as the second target clear point positions corresponding to object distances from near to far based on the descending order of the center values of the clusters in case that values of focusing positions decrease sequentially in a direction from the nearest object distance to the farthest object distance, the number of clusters in the first clustering result is greater than 1, and the target focusing strategy includes focusing on multiple object distances.

In the embodiment, the method for determining the clear point position is different based on the different number of clusters in the focusing result and the different target focusing strategies. Any object distance that needs to be focused may be accurately focused on. In addition, when the target focusing strategy includes focusing on multiple object distances, the focus clarity evaluation values of areas corresponding to different object distances may be taken into account. The object distance distribution law is determined through the clustering result, so that in a multi-object distance scenario, areas corresponding to different object distances have the same clarity degree.

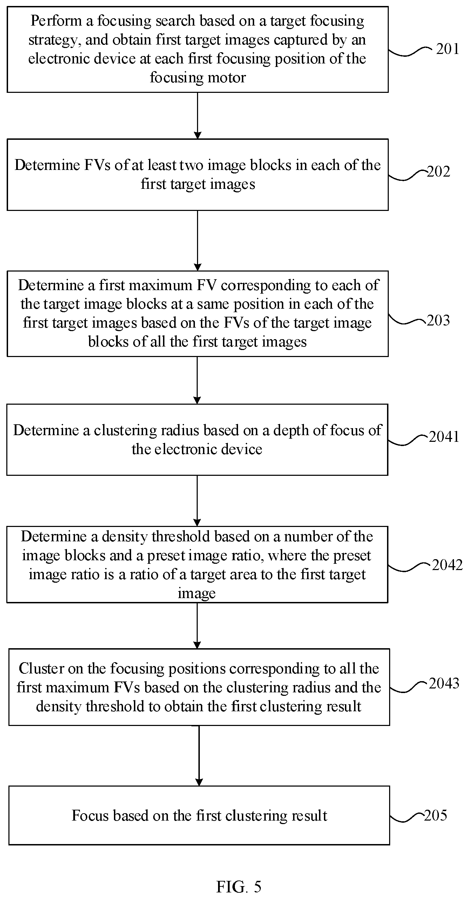

FIG. 5 is a third schematic flowchart of a focusing method according to an embodiment of the present application. As shown in FIG. 5, the above Step 204 of clustering on the focusing positions corresponding to all the first maximum FVs to obtain the first clustering result may be implemented through following steps.

Step 2041: determine a clustering radius based on a depth of focus of the electronic device.

In an embodiment, clustering parameters included in the DBSCAN clustering algorithm include a clustering radius (that is, epsilon radius (Eps))and a density threshold (that is, minimum points, (MinPts)). The Eps is set based on the depth of focus (Df), and Eps = k*Df, where Df is the depth of focus under the current focal length of the electronic device, and k is an adjustment coefficient. The Eps determines the object distance range included in each cluster during clustering. Determining Eps based on the depth of focus may ensure that after clustering is completed, the object distance distribution in each cluster is within the depth of focus, and the images are all in a clear state.

Step 2042: determine a density threshold based on a number of the image blocks and a preset image ratio, where the preset image ratio is a ratio of a target area to the first target image.

In an embodiment, the density threshold determines the minimum size for forming a cluster in clustering, and may be determined based on the size of the target area of user focusing concern. MinPts = $\alpha$*M*N, where $\alpha$ is the ratio of the target area to the first target image, and the target area is the image area occupied by the minimum target of user concern.

Step 2043: cluster on the focusing positions corresponding to all the first maximum FVs based on the clustering radius and the density threshold to obtain the first clustering result.

In an embodiment, when determining the clustering radius and the density threshold, a clustering algorithm is used to cluster on focusing positions corresponding to all the first maximum FVs based on the clustering radius and the density threshold to obtain the first clustering result.

In the embodiment, the clustering radius is determined based on the depth of focus, and the density threshold is determined based on the target area of user concern, so that the object distance range included in each cluster during clustering matches the depth of focus. This may ensure that after clustering is completed, the object distance distribution in each cluster is within the depth of focus, and the images are all in a clear state; and the size of each cluster is small, thereby making the final clustering result more accurate.

In an embodiment, the focusing method further includes the following steps: in case that the number of clusters in the first clustering result is not zero, the focusing motor is controlled to move to a center value of a target cluster corresponding to each object distance, and the center value of the target cluster is determined as a new focusing start position; a focusing search is performed starting from the new focusing start position based on a new focusing step size and a new focusing search interval to obtain third target images captured by the electronic device at each third focusing position of the focusing motor; the target clear point position of the object distance is updated based on the target focusing strategy and each third target image to obtain an updated clear point position; and the focusing motor is controlled to move to the updated clear point position.

In the embodiment, the clear point positions under different focusing strategies are found based on the above Steps 201 to 205. Focusing is completed by controlling the focusing motor to move to the corresponding clear point positions. In case that the preset focusing step size in the focusing search module is too large, the clear point position determined by clustering may not be accurate enough. A focusing fine-tuning module as an optional module may be configured to improve focusing accuracy. The center value of the cluster in the clustering result is used as a starting point for focusing fine-tuning, the weight of the image block to which the FV corresponding to the focusing position sample included in the cluster belongs is set to 1, and the weight of other image blocks is set to 0. A new focusing step size and a new focusing search interval are set, and the hill-climbing algorithm is performed once to find precise clear point positions under different object distances. The focusing motor is controlled to move to the clear point position after fine-tuning to complete the focusing process.

In the embodiment, the clear point position may be updated based on the focusing fine-tuning module, the updated clear point position is more accurate, thereby further improving focusing accuracy.

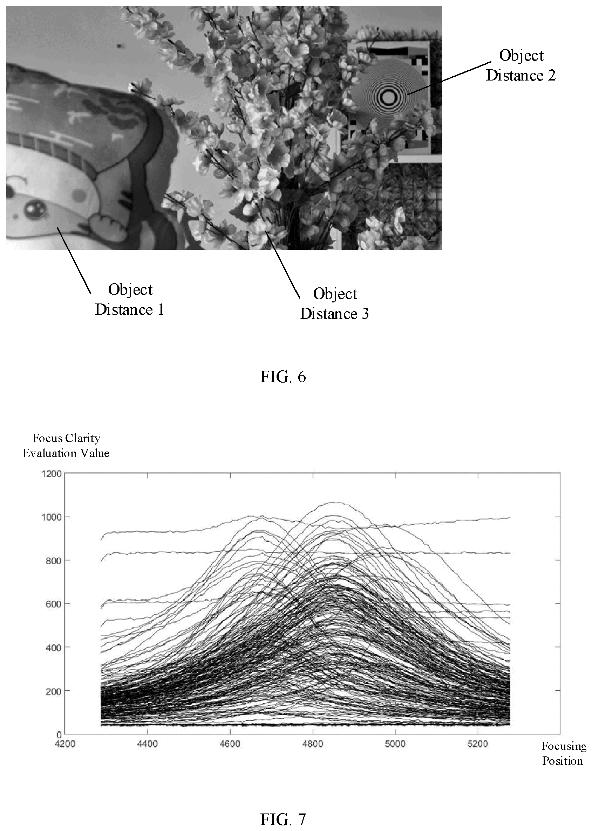

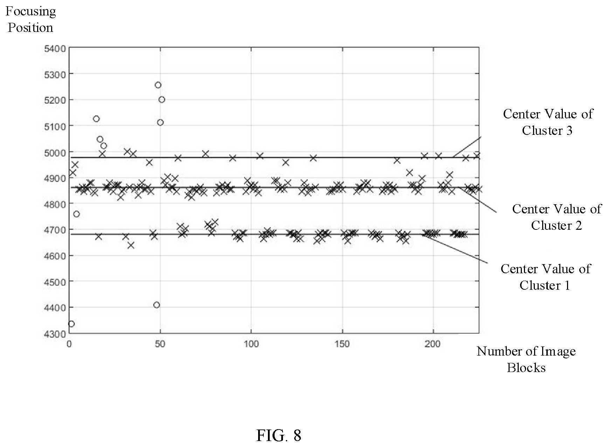

FIG. 6 is a schematic diagram of a monitoring scenario according to an embodiment of the present application. As shown in FIG. 6, the monitoring scenario includes three sets of object distances with large differences, where object distance 1 is the smallest, object distance 2 is the largest, and object distance 3 is between object distance 1 and object distance 2. If the user requires focusing on object distance 1, object distance 2, and object distance 3 sequentially, the focusing motor is controlled to complete a round of search within the focusing search interval, and record the FVs of the image block corresponding to each position at the same time. In the case of M = N = 15, there are 225 image blocks in total. The FV curve of each image block is shown in FIG. 7. Clustering processing is performed on the maximum FV corresponding to each image block, and the obtained clustering result is shown in FIG. 8. It may be seen from FIG. 8 that all image blocks are divided into 3 clusters, namely cluster 1, cluster 2, and cluster 3. The center value of cluster 1 is determined as the clear point position corresponding to object distance 1, the center value of cluster 2 is determined as the clear point position corresponding to object distance 3, and the center value of cluster 3 is determined as the clear point position corresponding to object distance 2. Circle samples indicate that the FV peak is not near the three effective object distances and are considered as noise points. Compared with the algorithm based on area weighting to calculate the FV peak, using the clustering algorithm may effectively avoid the influence of the FV of the noise sample points on the clear point position of the effective object distance, and at the same time may take into account the clarity degree of different object distances within the depth of focus. In addition, the center value of the cluster in the present application is determined based on the average of the maximum FVs, rather than the average of all FVs based on the traditional algorithm. Therefore, it may avoid the problem that the focusing clear point tends too much to the area rich in details, resulting in insufficient clarity in the area with less details.

The focusing apparatus according to an embodiment of the present application is be described below. The focusing apparatus described below may be corresponding to the focusing method described above.

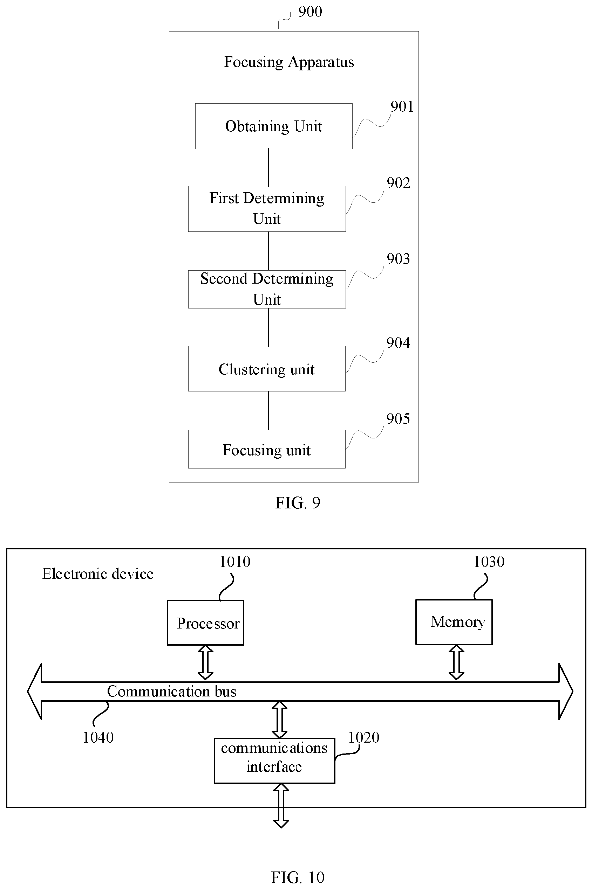

FIG. 9 is a schematic structural diagram of a focusing apparatus according to an embodiment of the present application. As shown in FIG. 9, the focusing apparatus 900 includes an obtaining unit 901, a first determining unit 902, a second determining unit 903, a clustering unit 904, and a focusing unit 905, where

the obtaining unit is configured to perform a focusing search based on a target focusing strategy, and obtain first target images captured by an electronic device at each first focusing position of a focusing motor;

the first determining unit is configured to determine focus values (FVs) of at least two image blocks in each of the first target images;

the second determining unit is configured to determine a first maximum FV corresponding to each of the target image blocks at a same position in each of the first target images based on the FVs of the target image blocks of all the first target images;

the clustering unit is configured to cluster on focusing positions corresponding to all the first maximum FVs to obtain a first clustering result; and

the focusing unit is configured to focus based on the first clustering result.

The focusing apparatus provided by the present application performs a focusing search based on a target focusing strategy, and obtains first target images captured by the electronic device at each first focusing position of the focusing motor; determines FVs of at least two image blocks in each of the first target images; determines a first maximum FV corresponding to each of the target image blocks at a same position in each of the first target images based on the FVs of the target image blocks of all the first target images; clusters on focusing positions corresponding to all the first maximum FVs; and finally focuses based on the obtained first clustering result. The present application obtains an object distance distribution law based on the clustering result of the maximum FVs corresponding to the image blocks, and focuses based on the object distance distribution law, thereby improving focusing accuracy.

In the embodiment, the obtaining unit 901 is further configured to:

obtain a first image captured by the electronic device in case that the focusing motor is at a focusing start position, where the focusing start position includes a current position of the focusing motor in case that the target focusing strategy includes focusing on a nearest object distance or focusing on a farthest object distance; and the focusing start position includes a minimum focusing position of a focusing search interval in case that the target focusing strategy includes focusing on a K-th object distance starting from the nearest object distance or focusing on multiple object distances, where K is an integer greater than or equal to 1;

control the focusing motor to move from the focusing start position based on a preset focusing step size and a first focusing search direction to obtain each of target positions, where in case that the target focusing strategy includes focusing on the nearest object distance, the first focusing search direction is a direction searching towards the minimum focusing position of the focusing search interval; in case that the target focusing strategy includes focusing on the farthest object distance, the first focusing search direction is a direction searching towards the maximum focusing position of the focusing search interval; and in case that the target focusing strategy includes focusing on the K-th object distance starting from the nearest object distance or focusing on multiple object distances, the first focusing search direction is a direction searching towards the maximum focusing position of the focusing search interval;

obtain each of second images captured by the electronic device in case that the focusing motor is at each of the target positions; and

determine the first image and each of the second images as the first target images.

In the embodiment, the focusing unit 905 is further configured to:

determine an average value of the first focusing positions corresponding to all the first maximum FVs as a first target clear point position in case that a number of clusters in the first clustering result is zero, and control the focusing motor to move to the first target clear point position; or

determine a second target clear point position based on the target focusing strategy and a center value of the clusters in case that the number of clusters in the first clustering result is not zero, and control the focusing motor to move to the second target clear point position.

In the embodiment, the focusing unit 905 is further configured to:

determine a distance between the center value of the cluster and the focusing start position in case that the number of clusters in the first clustering result is equal to 1, and the target focusing strategy includes focusing on the nearest object distance or focusing on the farthest object distance;

determine the center value of the cluster as the second target clear point position in case that the distance is greater than or equal to a preset distance; or,

perform a focusing search from the focusing start position based on the preset focusing step size and a second focusing search direction to obtain second target images captured by the electronic device at each second focusing position of the focusing motor in case that the distance is less than the preset distance, where the second focusing search direction is opposite to the first focusing search direction; determine FVs of at least two image blocks in each of the second target images; determine a second maximum FV corresponding to each of the target image blocks at a same position based on the FVs of the target image blocks of all the first target images and all the second target images; cluster on focusing positions corresponding to all the second maximum FVs to obtain a second clustering result; and determine the second target clear point position based on the second clustering result.

In the embodiment, the focusing unit 905 is further configured to:
determine the center value of the cluster as the second target clear point position in case that the number of clusters in the first clustering result is equal to 1, and the target focusing strategy includes focusing on the K-th object distance starting from the nearest object distance or focusing on multiple object distances.
In the embodiment, in case that values of focusing positions increase sequentially in a direction from the nearest object distance to the farthest object distance, the focusing unit 905 is further configured to:

determine a smallest center value of the clusters as the second target clear point position in case that the number of clusters in the first clustering result is greater than 1, and the target focusing strategy includes focusing on the nearest object distance;

determine a largest center value of the clusters as the second target clear point position in case that the number of clusters in the first clustering result is greater than 1, and the target focusing strategy includes focusing on the farthest object distance;

determine a K-th center value of the clusters as the second target clear point position based on an ascending order of the center values of the clusters in case that the number of clusters in the first clustering result is greater than 1, and the target focusing strategy includes focusing on the K-th object distance starting from the nearest object distance; or

determine each sorted center value of the clusters as the second target clear point positions corresponding to object distances from near to far based on the ascending order of the center values of the clusters in case that the number of clusters in the first clustering result is greater than 1, and the target focusing strategy includes focusing on multiple object distances.

In the embodiment, the clustering unit 904 is further configured to:

determine a clustering radius based on a depth of focus of the electronic device;

determine a density threshold based on a number of the image blocks and a preset image ratio, where the preset image ratio is a ratio of a target area to the first target image; and

cluster on the focusing positions corresponding to all the first maximum FVs based on the clustering radius and the density threshold to obtain the first clustering result.

FIG. 10 is a schematic structural diagram of an electronic device according to an embodiment of the present application. As shown in FIG. 10, the electronic device may include: a processor 1010, a communications interface 1020, a memory 1030, and a communication bus 1040, where the processor 1010, the communications interface 1020, and the memory 1030 communicate with each other through the communication bus 1040. The processor 1010 calls logical instructions in the memory 1030 to execute the focusing method, and the method includes: performing a focusing search based on a target focusing strategy, and obtaining first target images captured by an electronic device at each first focusing position of a focusing motor;

determining focus values (FVs) of at least two image blocks in each of the first target images;

determining a first maximum FV corresponding to each of the target image blocks at a same position in each of the first target images based on the FVs of the target image blocks of all the first target images;

clustering on focusing positions corresponding to all the first maximum FVs to obtain a first clustering result; and

focusing based on the first clustering result.

Furthermore, the logical instructions in the memory 1030 may be implemented as software functional units and, when sold or used as independent products, may be stored in a computer-readable storage medium. Based on this understanding, the technical solution of the present application, in essence, or the part that contributes to the prior art, or a part of the technical solution, may be embodied in the form of a software product. The computer software product is stored in a storage medium and includes several instructions to cause a computer device (which may be a personal computer, server, or network device, etc.) to execute all or part of the steps of the methods described in each embodiment of the present application. The storage medium includes various media capable of storing program code, such as USB drives, portable hard drives, read-only memory (ROM), random access memory (RAM), magnetic disks, or optical disks.

A computer program product is also provided according to the present application, including a computer program stored on a computer-readable storage medium, and the computer program implements any of focusing methods described above when executed by a processor. The method includes: performing a focusing search based on a target focusing strategy, and obtaining first target images captured by an electronic device at each first focusing position of a focusing motor;

determining focus values (FVs) of at least two image blocks in each of the first target images;

determining a first maximum FV corresponding to each of the target image blocks at a same position in each of the first target images based on the FVs of the target image blocks of all the first target images;

clustering on focusing positions corresponding to all the first maximum FVs to obtain a first clustering result; and

focusing based on the first clustering result.

A computer-readable storage medium is also provided according to the present application, storing a computer program, and the computer program implements any of focusing methods described above when executed by a processor. The method includes: performing a focusing search based on a target focusing strategy, and obtaining first target images captured by an electronic device at each first focusing position of a focusing motor;

determining focus values (FVs) of at least two image blocks in each of the first target images;

determining a first maximum FV corresponding to each of the target image blocks at a same position in each of the first target images based on the FVs of the target image blocks of all the first target images;

clustering on focusing positions corresponding to all the first maximum FVs to obtain a first clustering result; and

focusing based on the first clustering result.

The embodiments for apparatus described above are merely illustrative. The units described as separate components may or may not be physically separate, and the components shown as units may or may not be physical units, i.e., they may be located in one place or distributed across multiple network units. Some or all of the modules may be selected according to actual needs to achieve the purpose of this embodiment. Those skilled in the art may understand and implement this without any creative effort.

Through the description of the above embodiments, those skilled in the art may clearly understand that each embodiment may be implemented by means of software plus a necessary universal hardware platform, and of course, may also be implemented by means of hardware. Based on such understanding, the above technical solution essentially or a part contributing to the prior art may be embodied in the form of a software product, and the computer software product may be stored in a non-transient computer-readable storage medium, such as a ROM/RAM, a magnetic disk, an optical disk, etc. and includes several instructions for enabling a computer device (which may be a personal computer, a server, or a network device, etc.) to perform the method described in each embodiment or some parts of the embodiments.

Finally, it should be noted that the above embodiments are only used to illustrate the technical solutions of the present application and are not limited thereto. Although the present application is described in detail with reference to the foregoing embodiments, those skilled in the art should understand that: modifications may still be made to the technical solutions described in each of the foregoing embodiments, or equivalent substitutions may be made to some of the technical features; and these modifications or substitutions do not cause the essence of the corresponding technical solutions to deviate from the scope of the technical solutions of each embodiment of the present application.

**Claims**

1. A focusing method, comprising:

   performing a focusing search based on a target focusing strategy, and obtaining first target images captured by an electronic device at each first focusing position of a focusing motor;
   determining focus values (FVs) of at least two image blocks in each of the first target images;
   determining a first maximum FV corresponding to each of the target image blocks at a same position in each of the first target images based on the FVs of the target image blocks of all the first target images;
   clustering on focusing positions corresponding to all the first maximum FVs to obtain a first clustering result; and
   focusing based on the first clustering result.

2. The method of claim 1, wherein performing the focusing search based on the target focusing strategy, and obtaining the first target images captured by the electronic device at each first focusing position of the focusing motor comprises:

   obtaining a first image captured by the electronic device in case that the focusing motor is at a focusing start position, wherein the focusing start position comprises a current position of the focusing motor in case that the target focusing strategy comprises focusing on a nearest object distance or focusing on a farthest object distance; and the focusing start position comprises a minimum focusing position of a focusing search interval in case that the target focusing strategy comprises focusing on a K-th object distance starting from the nearest object distance or focusing on multiple object distances, wherein K is an integer greater than or equal to 1;
   controlling the focusing motor to move from the focusing start position based on a preset focusing step size and a first focusing search direction to obtain each of target positions;
   obtaining each of second images captured by the electronic device in case that the focusing motor is at each of the target positions; and
   determining the first image and each of the second images as the first target images.

3. The method of claim 2, wherein focusing based on the first clustering result comprises:

   determining an average value of the first focusing positions corresponding to all the first maximum FVs as a first target clear point position in case that a number of clusters in the first clustering result is zero, and controlling the focusing motor to move to the first target clear point position; or
   determining a second target clear point position based on the target focusing strategy and a center value of the clusters in case that the number of clusters in the first clustering result is not zero, and controlling the focusing motor to move to the second target clear point position.

4. The method of claim 3, wherein determining the second target clear point position based on the target focusing strategy and the center value of the clusters in case that the number of clusters in the first clustering result is not zero comprises:

   determining a distance between the center value of the cluster and the focusing start position in case that the number of clusters in the first clustering result is equal to 1, and the target focusing strategy comprises focusing on the nearest object distance or focusing on the farthest object distance;

determining the center value of the cluster as the second target clear point position in case that the distance is greater than or equal to a preset distance; or,

performing a focusing search from the focusing start position based on the preset focusing step size and a second focusing search direction to obtain second target images captured by the electronic device at each second focusing position of the focusing motor in case that the distance is less than the preset distance, wherein the second focusing search direction is opposite to the first focusing search direction; determining FVs of at least two image blocks in each of the second target images; determining a second maximum FV corresponding to each of the target image blocks at a same position based on the FVs of the target image blocks of all the first target images and all the second target images; clustering on focusing positions corresponding to all the second maximum FVs to obtain a second clustering result; and determining the second target clear point position based on the second clustering result.

5. The method of claim 3, wherein determining the second target clear point position based on the target focusing strategy and the center value of the clusters in case that the number of clusters in the first clustering result is not zero comprises:

determining the center value of the cluster as the second target clear point position in case that the number of clusters in the first clustering result is equal to 1, and the target focusing strategy comprises focusing on the K-th object distance starting from the nearest object distance or focusing on multiple object distances.

6. The method of claim 3, wherein in case that values of focusing positions increase sequentially in a direction from the nearest object distance to the farthest object distance and the number of clusters in the first clustering result is not zero, determining the second target clear point position based on the target focusing strategy and the center value of the clusters comprises:

determining a smallest center value of the clusters as the second target clear point position in case that the number of clusters in the first clustering result is greater than 1, and the target focusing strategy comprises focusing on the nearest object distance;

determining a largest center value of the clusters as the second target clear point position in case that the number of clusters in the first clustering result is greater than 1, and the target focusing strategy comprises focusing on the farthest object distance;

determining a K-th center value of the clusters as the second target clear point position based on an ascending order of the center values of the clusters in case that the number of clusters in the first clustering result is greater than 1, and the target focusing strategy comprises focusing on the K-th object distance starting from the nearest object distance; or

determining each sorted center value of the clusters as the second target clear point positions corresponding to object distances from near to far based on the ascending order of the center values of the clusters in case that the number of clusters in the first clustering result is greater than 1, and the target focusing strategy comprises focusing on multiple object distances.

7. The method of claim 1, wherein clustering on the focusing positions corresponding to all the first maximum FVs to obtain the first clustering result comprises:

determining a clustering radius based on a depth of focus of the electronic device;

determining a density threshold based on a number of the image blocks and a preset image ratio, wherein the preset image ratio is a ratio of a target area to the first target image; and

clustering on the focusing positions corresponding to all the first maximum FVs based on the clustering radius and the density threshold to obtain the first clustering result.

8. The method of claim 2, wherein clustering on the focusing positions corresponding to all the first maximum FVs to obtain the first clustering result comprises:

determining a clustering radius based on a depth of focus of the electronic device;

determining a density threshold based on a number of the image blocks and a preset image ratio, wherein the preset image ratio is a ratio of a target area to the first target image; and

clustering on the focusing positions corresponding to all the first maximum FVs based on the clustering radius and the density threshold to obtain the first clustering result.

9. The method of claim 3, wherein clustering on the focusing positions corresponding to all the first maximum FVs to obtain the first clustering result comprises:

   determining a clustering radius based on a depth of focus of the electronic device;
   determining a density threshold based on a number of the image blocks and a preset image ratio, wherein the preset image ratio is a ratio of a target area to the first target image; and
   clustering on the focusing positions corresponding to all the first maximum FVs based on the clustering radius and the density threshold to obtain the first clustering result.

10. The method of claim 4, clustering on the focusing positions corresponding to all the first maximum FVs to obtain the first clustering result comprises:

   determining a clustering radius based on a depth of focus of the electronic device;
   determining a density threshold based on a number of the image blocks and a preset image ratio, wherein the preset image ratio is a ratio of a target area to the first target image; and
   clustering on the focusing positions corresponding to all the first maximum FVs based on the clustering radius and the density threshold to obtain the first clustering result.

11. The method of claim 5, wherein clustering on the focusing positions corresponding to all the first maximum FVs to obtain the first clustering result comprises:

   determining a clustering radius based on a depth of focus of the electronic device;
   determining a density threshold based on a number of the image blocks and a preset image ratio, wherein the preset image ratio is a ratio of a target area to the first target image; and
   clustering on the focusing positions corresponding to all the first maximum FVs based on the clustering radius and the density threshold to obtain the first clustering result.

12. The method of claim 6, wherein clustering on the focusing positions corresponding to all the first maximum FVs to obtain the first clustering result comprises:

   determining a clustering radius based on a depth of focus of the electronic device;
   determining a density threshold based on a number of the image blocks and a preset image ratio, wherein the preset image ratio is a ratio of a target area to the first target image; and
   clustering on the focusing positions corresponding to all the first maximum FVs based on the clustering radius and the density threshold to obtain the first clustering result.

13. A focusing apparatus, comprising:

   an obtaining unit, configured to perform a focusing search based on a target focusing strategy, and obtain first target images captured by an electronic device at each first focusing position of a focusing motor;
   a first determining unit, configured to determine focus values (FVs) of at least two image blocks in each of the first target images;
   a second determining unit, configured to determine a first maximum FV corresponding to each of the target image blocks at a same position in each of the first target images based on the FVs of the target image blocks of all the first target images;
   a clustering unit, configured to cluster on focusing positions corresponding to all the first maximum FVs to obtain a first clustering result; and
   a focusing unit, configured to focus based on the first clustering result.

14. The apparatus of claim 13, wherein the obtaining unit is further configured to:

   obtain a first image captured by the electronic device in case that the focusing motor is at a focusing start position, wherein the focusing start position comprises a current position of the focusing motor in case that the target focusing strategy comprises focusing on a nearest object distance or focusing on a farthest object distance; and
   the focusing start position comprises a minimum focusing position of a focusing search interval in case that the target focusing strategy comprises focusing on a K-th object distance starting from the nearest object distance or focusing on multiple object distances, wherein K is an integer greater than or equal to 1;
   control the focusing motor to move from the focusing start position based on a preset focusing step size and a first focusing search direction to obtain each of target positions;

obtain each of second images captured by the electronic device in case that the focusing motor is at each of the target positions; and

determine the first image and each of the second images as the first target images.

**15.** The apparatus of claim 14, wherein the focusing unit is further configured to:

determine an average value of the first focusing positions corresponding to all the first maximum FVs as a first target clear point position in case that a number of clusters in the first clustering result is zero, and control the focusing motor to move to the first target clear point position; or

determine a second target clear point position based on the target focusing strategy and a center value of the clusters in case that the number of clusters in the first clustering result is not zero, and control the focusing motor to move to the second target clear point position.

**16.** The apparatus of claim 15, wherein the focusing unit is further configured to:

determine a distance between the center value of the cluster and the focusing start position in case that the number of clusters in the first clustering result is equal to 1, and the target focusing strategy comprises focusing the nearest object distance or focusing on the farthest object distance;

determine the center value of the cluster as the second target clear point position in case that the distance is greater than or equal to a preset distance; or,

perform a focusing search from the focusing start position based on the preset focusing step size and a second focusing search direction to obtain second target images captured by the electronic device at each second focusing position of the focusing motor in case that the distance is less than the preset distance, wherein the second focusing search direction is opposite to the first focusing search direction; determine FVs of at least two image blocks in each of the second target images; determine a second maximum FV corresponding to each of the target image blocks at a same position based on the FVs of the target image blocks of all the first target images and all the second target images; cluster on focusing positions corresponding to all the second maximum FVs to obtain a second clustering result; and determine the second target clear point position based on the second clustering result.

**17.** The apparatus of claim 15, wherein the focusing unit is further configured to:

determine the center value of the cluster as the second target clear point position in case that the number of clusters in the first clustering result is equal to 1, and the target focusing strategy comprises focusing on the K-th object distance starting from the nearest object distance or focusing on multiple object distances.

**18.** The apparatus of claim 15, wherein in case that values of focusing positions increase sequentially in a direction from the nearest object distance to the farthest object distance, the focusing unit is further configured to:

determine a smallest center value of the clusters as the second target clear point position in case that the number of clusters in the first clustering result is greater than 1, and the target focusing strategy comprises focusing on the nearest object distance;

determine a largest center value of the clusters as the second target clear point position in case that the number of clusters in the first clustering result is greater than 1, and the target focusing strategy comprises focusing on the farthest object distance;

determine a K-th center value of the clusters as the second target clear point position based on an ascending order of the center values of the clusters in case that the number of clusters in the first clustering result is greater than 1, and the target focusing strategy comprises focusing on the K-th object distance starting from the nearest object distance; or

determine each sorted center value of the clusters as the second target clear point positions corresponding to object distances from near to far based on the ascending order of the center values of the clusters in case that the number of clusters in the first clustering result is greater than 1, and the target focusing strategy comprises focusing on multiple object distances.

**19.** An electronic device comprising a memory, a processor, and a computer program stored in the memory and executable in the processor, wherein the processor implements the focusing method of any of claims 1 to 12 when executing the computer program.

**20.** A computer-readable storage medium storing a computer program, wherein the computer program implements the focusing method of any of claims 1 to 12 when executed by a processor.

FIG. 1

Perform a focusing search based on a target focusing strategy, and obtain first target images captured by an electronic device at each first focusing position of the focusing motor ⟋201

Determine FVs of at least two image blocks in each of the first target images ⟋202

Determine a first maximum FV corresponding to each of the target image blocks at a same position in each of the first target images based on the FVs of the target image blocks of all the first target images ⟋203

Cluster on focusing positions corresponding to all the first maximum FVs to obtain a first clustering result ⟋204

Focus based on the first clustering result ⟋205

FIG. 2

FIG. 3

| Obtain a first image captured by the electronic device in case that the focusing motor is at a focusing start position, where the focusing start position includes a current position of the focusing motor in case that the target focusing strategy includes focusing on a nearest object distance or focusing on a farthest object distance; and the focusing start position includes a minimum focusing position of a focusing search interval in case that the target focusing strategy includes focusing on a K-th object distance starting from the nearest object distance or focusing on multiple object distances | ～2011 |

↓

| Control the focusing motor to move from the focusing start position based on a preset focusing step size and a first focusing search direction to obtain each of target positions | ～2012 |

↓

| Obtain each of second images captured by the electronic device in case that the focusing motor is at each of the target positions | ～2013 |

↓

| Determine the first image and each of the second images as the first target images | ～2014 |

↓

| Determine FVs of at least two image blocks in each of the first target images | ～202 |

↓

| Determine a first maximum FV corresponding to each of the target image blocks at a same position in each of the first target images based on the FVs of the target image blocks of all the first target images | ～203 |

↓

| Cluster on focusing positions corresponding to all the first maximum FVs to obtain a first clustering result | ～204 |

↓

| Focus based on the first clustering result | ～205 |

FIG. 4

Perform a focusing search based on a target focusing strategy, and obtain first target images captured by an electronic device at each first focusing position of the focusing motor ⌇~201

Determine FVs of at least two image blocks in each of the first target images ⌇~202

Determine a first maximum FV corresponding to each of the target image blocks at a same position in each of the first target images based on the FVs of the target image blocks of all the first target images ⌇~203

Determine a clustering radius based on a depth of focus of the electronic device ⌇~2041

Determine a density threshold based on a number of the image blocks and a preset image ratio, where the preset image ratio is a ratio of a target area to the first target image ⌇~2042

Cluster on the focusing positions corresponding to all the first maximum FVs based on the clustering radius and the density threshold to obtain the first clustering result ⌇~2043

Focus based on the first clustering result ⌇~205

FIG. 5

FIG. 6

FIG. 7

Focusing
Position

FIG. 8

900

Focusing Apparatus

Obtaining Unit — 901

First Determining Unit — 902

Second Determining Unit — 903

Clustering unit — 904

Focusing unit — 905

FIG. 9

Electronic device

1010
Processor

1030
Memory

Communication bus

1040

1020
communications interface

FIG. 10

## INTERNATIONAL SEARCH REPORT

| International application No. |
|---|
| **PCT/CN2024/091955** |

### A. CLASSIFICATION OF SUBJECT MATTER

H04N23/67(2023.01)i

According to International Patent Classification (IPC) or to both national classification and IPC

### B. FIELDS SEARCHED

Minimum documentation searched (classification system followed by classification symbols)

IPC: H04N23/-

Documentation searched other than minimum documentation to the extent that such documents are included in the fields searched

Electronic data base consulted during the international search (name of data base and, where practicable, search terms used)

CNABS: CNTXT; ENTXTC; CNKI; VEN; WOTXT; EPTXT; USTXT; JPTXT; IEEE: 聚焦, 对焦, 合焦, 调焦, 图像, 分区, 区块, 区域, 子块, 分割, 划分, 聚焦清晰度, 焦点值, FV, 最大, 最高, 峰值, 极值, 位置, 统计, 聚类, 频次, 频率, 次数, K均值, DBSCAN, focus+, image, divide, sub 1w region?, block?, focus 1w value, max, peak, position, statistic+, cluster, frequency, times, K 1w means

### C. DOCUMENTS CONSIDERED TO BE RELEVANT

| Category* | Citation of document, with indication, where appropriate, of the relevant passages | Relevant to claim No. |
|---|---|---|
| Y | CN 112823507 A (SZ DJI TECHNOLOGY CO., LTD.) 18 May 2021 (2021-05-18) description, paragraphs 0050 and 0140-0152 | 1-3, 5-6, 13-15, 17-20 |
| Y | CN 103888659 A (CASIO COMPUTER CO., LTD.) 25 June 2014 (2014-06-25) description, paragraphs 0076-0095 | 1-3, 5-6, 13-15, 17-20 |
| A | CN 104469160 A (YULONG COMPUTER TELECOMMUNICATION SCIENTIFIC (SHENZHEN) CO., LTD.) 25 March 2015 (2015-03-25) entire document | 1-20 |
| A | CN 110611771 A (ZHEJIANG DAHUA TECHNOLOGY CO., LTD.) 24 December 2019 (2019-12-24) entire document | 1-20 |
| A | JP 2007279694 A (FUJIFILM CORP.) 25 October 2007 (2007-10-25) entire document | 1-20 |
| A | US 2006001955 A1 (APPLERA CORP.) 05 January 2006 (2006-01-05) entire document | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 June 2024** | **21 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/091955** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 105453538 A (SAMSUNG ELECTRONICS CO., LTD.) 30 March 2016 (2016-03-30) entire document | 1-20 |

Form PCT/ISA/210 (second sheet) (July 2022)

## INTERNATIONAL SEARCH REPORT
### Information on patent family members

| International application No. |
| --- |
| **PCT/CN2024/091955** |

| Patent document cited in search report | | | Publication date (day/month/year) | Patent family member(s) | | | Publication date (day/month/year) |
| --- | --- | --- | --- | --- | --- | --- | --- |
| CN | 112823507 | A | 18 May 2021 | WO | 2021189471 | A1 | 30 September 2021 |
| CN | 103888659 | A | 25 June 2014 | JP | 2014119715 | A | 30 June 2014 |
| | | | | JP | 5786847 | B2 | 30 September 2015 |
| | | | | US | 2014192216 | A1 | 10 July 2014 |
| | | | | US | 9386213 | B2 | 05 July 2016 |
| | | | | KR | 20140079740 | A | 27 June 2014 |
| | | | | KR | 101635254 | B1 | 30 June 2016 |
| | | | | CN | 103888659 | B | 20 March 2018 |
| CN | 104469160 | A | 25 March 2015 | WO | 2016095285 | A1 | 23 June 2016 |
| CN | 110611771 | A | 24 December 2019 | CN | 110611771 | B | 30 April 2021 |
| JP | 2007279694 | A | 25 October 2007 | JP | 4802113 | B2 | 26 October 2011 |
| US | 2006001955 | A1 | 05 January 2006 | JP | 2008504575 | A | 14 February 2008 |
| | | | | ATE | 521006 | T1 | 15 September 2011 |
| | | | | EP | 1761817 | A1 | 14 March 2007 |
| | | | | EP | 1761817 | B1 | 17 August 2011 |
| | | | | WO | 2006004947 | A1 | 12 January 2006 |
| | | | | US | 2008285879 | A1 | 20 November 2008 |
| | | | | US | 7394943 | B2 | 01 July 2008 |
| CN | 105453538 | A | 30 March 2016 | US | 2015035855 | A1 | 05 February 2015 |
| | | | | US | 10237491 | B2 | 19 March 2019 |
| | | | | WO | 2015016619 | A1 | 05 February 2015 |
| | | | | EP | 3028445 | A1 | 08 June 2016 |
| | | | | EP | 3028445 | A4 | 08 March 2017 |
| | | | | KR | 20150015286 | A | 10 February 2015 |
| | | | | KR | 102068748 | B1 | 11 February 2020 |
| | | | | CN | 105453538 | B | 06 September 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311239870X